# DEMANDE DE BREVET EUROPEEN

(11) **EP 3 392 436 A1**
(43) Date de publication de la demande: **24.10.2018**
(21) Numéro de dépôt: 18168042.2
(22) Date de dépôt: 18.04.2018
(51) Int. Cl.: E05D 5/12, E05D 7/10

(54) **ENSEMBLE DE CHARNIÈRE DÉSAXABLE, ARBRE DE PIVOTEMENT TEMPORAIRE, ET PROCÉDÉ DE FABRICATION D'UN VÉHICULE**

(30) Priorité: 19.04.2017 FR 1753375
(71) Demandeur: Defta Service, 77700 Chessy (FR)
(72) Inventeur: SOLIOT, Lionel, 78250 MEULAN-EN-YVELINES (FR); GENIN, Christian, 77145 MAY-EN-MULTIEN (FR)
(74) Mandataire: Lavoix

(57) **Abrégé**

Cet ensemble de charnière désaxable pour un véhicule comprend une charnière (501) qui comprend deux charnons (503, 505) prévus pour être montés pivotants l'un par rapport à l'autre autour d'un axe de pivotement, par l'intermédiaire d'un arbre de pivotement définitif de la charnière, et en outre un arbre de pivotement temporaire (607), les charnons (503, 505) pouvant être montés à pivotement l'un par rapport à l'autre autour de l'axe de pivotement par l'intermédiaire de l'arbre de pivotement temporaire (607), préalablement au montage de l'arbre de pivotement définitif, l'arbre de pivotement temporaire (607) étant configuré pour être soustrait des charnons (503, 505) pour libérer ces derniers l'un de l'autre. Selon l'invention, l'arbre de pivotement temporaire (607) est exempt de matériau métallique.

## Description

L'invention concerne un ensemble de charnière désaxable pour un véhicule, un arbre de pivotement temporaire pour cet ensemble de charnière désaxable, et un procédé de fabrication d'un véhicule mettant en oeuvre cet ensemble de charnière désaxable.

L'invention se rapporte plus particulièrement à la fabrication d'un véhicule de type automobile.

FR 2 916 471 A1 décrit une charnière d'articulation de portière d'un véhicule automobile avec un charnon fixe et un charnon mobile reliés par un axe, cette charnière étant désaxable. En effet, l'axe de la charnière est provisoire et amovible, et peut être retiré temporairement ou définitivement, au cours de la fabrication du véhicule, pour procéder à une opération d'habillage de la portière.

Dans la pratique, les axes temporaires sont généralement réalisés en métal, tel que de l'acier. Par conséquent, ils présentent l'inconvénient de nécessiter des traitements thermiques et de surface du métal qui les constitue, de manière à pouvoir résister aux contraintes mécaniques imposées par le fonctionnement de la charnière, ainsi qu'aux différents traitements effectués sur le véhicule pendant sa fabrication, notamment en ce qui concerne le ferrage, la cataphorèse et la peinture. Lors de la cataphorèse ou d'électrodéposition de peinture, des particules sont formées sur l'axe temporaire, du fait de son matériau métallique. La manipulation ultérieure de la porte provoque le dépôt de ces particules sur les bas de caisse des véhicules concernés, doit être nettoyés, par exemple par soufflage, avant de poursuivre la fabrication du véhicule. Egalement, l'axe temporaire présente une structure suffisamment résistante pour permettre la manipulation de la porte sans rupture de l'axe, ce qui peut entraîner des difficultés à démonter l'axe, du fait de cette résistance particulièrement élevée. Il convient alors de prévoir un outillage d'extraction de l'axe temporaire.

Par conséquent, l'invention vise à résoudre les inconvénients susmentionnés en proposant un nouvel ensemble de charnière désaxable particulièrement facile à utiliser et ne générant pas de particules lors de son utilisation.

L'invention a pour objet un ensemble de charnière désaxable pour un véhicule, l'ensemble de charnière désaxable comprenant :
- une charnière qui comprend deux charnons prévus pour être montés pivotants l'un par rapport à l'autre autour d'un axe de pivotement, par l'intermédiaire d'un arbre de pivotement définitif de la charnière, et en outre
- un arbre de pivotement temporaire, les charnons pouvant être montés à pivotement l'un par rapport à l'autre autour de l'axe de pivotement par l'intermédiaire de l'arbre de pivotement temporaire, préalablement au montage de l'arbre de pivotement définitif, l'arbre de pivotement temporaire étant configuré pour être soustrait des charnons pour libérer ces derniers l'un de l'autre.

Selon l'invention, l'arbre de pivotement temporaire est exempt de matériau métallique.

Grâce à l'invention, l'absence de matériau métallique dans l'arbre de pivotement temporaire évite la formation de particules pendant la fabrication du véhicule, en particulier pendant l'assemblage de la caisse. En effet, l'absence de matériau métallique dans l'arbre de pivotement temporaire fait que la cataphorèse n'entraîne pas la formation de particules sur l'arbre temporaire. De plus, l'arbre de pivotement temporaire est avantageusement suffisamment résistant pour maintenir les charnons montés pendant des étapes de fabrication du véhicule, tout en étant suffisamment fragile pour pouvoir être facilement soustrait, par démontage de l'arbre temporaire de la charnière, voire même, en dernier recours, par destruction de l'arbre de pivotement temporaire, pour permettre de libérer les charnons l'un de l'autre. L'absence de matériau métallique rend en outre l'arbre de pivotement temporaire peu coûteux et facile à fabriquer, de sorte qu'il peut avantageusement constituer une pièce jetable ou recyclable, après une ou plusieurs utilisations, sur un ou plusieurs véhicules.

Des caractéristiques optionnelles et avantageuses de l'invention, à prendre seules ou selon toutes combinaisons techniquement admissibles, sont définies dans ce qui suit :
- l'arbre de pivotement temporaire est réalisé au moins partiellement, de préférence au moins majoritairement, en matière plastique, de préférence du polyamide.
- l'arbre de pivotement temporaire est réalisé en une seule pièce d'un seul tenant, dans un même matériau.
- l'arbre de pivotement temporaire comprend en outre au moins deux arrêts axiaux, tournés dans une direction de montage de l'arbre de pivotement temporaire, pour positionner axialement les charnons l'un par rapport à l'autre lorsque ces charnons sont montés par l'intermédiaire de l'arbre de pivotement temporaire.
- l'arbre de pivotement temporaire comprend en outre un membre résilient configuré pour : présenter une configuration radialement resserrée, dans laquelle l'arbre de pivotement temporaire peut être monté sur la charnière de façon à ce que les charnons soient montés pivotants par son intermédiaire ; présenter une configuration radialement étendue, dans laquelle, lorsque l'arbre de pivotement temporaire est monté, le membre résilient forme un arrêt axial tourné dans une direction de démontage de l'arbre de pivotement temporaire, de façon que le membre résilient s'oppose au démontage de l'arbre de pivotement temporaire des charnons, et revenir par élasticité vers la configuration radialement étendue lorsqu'il est mis en configuration radialement resserrée.
- le membre résilient comprend deux jambes résilientes définissant entre elles une encoche axiale de débattement débouchant à une extrémité axiale de l'arbre de pivotement temporaire, le passage de la configuration radialement étendue à la configuration radialement resserrée correspondant à un rapprochement d'au moins l'une des jambes résilientes vers l'autre au niveau de l'encoche axiale de débattement.
- l'arbre de pivotement temporaire comprend un tronçon de tige, de diamètre inférieur à des orifices de pivotement ménagés au travers des charnons, et au travers desquels l'arbre de pivotement temporaire est accueilli lorsque les charnons sont montés à pivotement par son intermédiaire ; et une partie extrémale de manipulation, comprenant une tête extrémale de forme généralement discoïde, ainsi qu'un tronçon de préhension s'étendant entre la tête extrémale et le tronçon de tige, le tronçon de préhension présentant un diamètre inférieur à celui de la tête extrémale et supérieur à celui d'au moins l'un des orifices de pivotement.
- l'ensemble de charnière désaxable comprend un dispositif d'arrêt de porte présentant un orifice de montage traversant, et l'arbre de pivotement temporaire comprend un tronçon d'encliquetage du dispositif d'arrêt de porte sur l'arbre de pivotement temporaire, pour fixer axialement le dispositif d'arrêt de porte sur l'arbre de pivotement temporaire par enfilement du dispositif d'arrêt de porte sur le tronçon d'encliquetage via l'orifice de montage.

L'invention a également pour objet un procédé de fabrication d'un véhicule, le procédé comprenant les étapes successives suivantes :
a) fourniture d'une caisse du véhicule, d'au moins une porte du véhicule et d'au moins un ensemble de charnière désaxable conforme à ce qui précède,
b) montage temporaire de la porte sur la caisse, en montant l'un des charnons sur la caisse et l'autre charnon sur la porte, les charnons étant montés de façon pivotante l'un par rapport à l'autre autour de l'axe de pivotement par l'intermédiaire de l'arbre de pivotement temporaire,
c) démontage temporaire de la porte, comprenant un démontage temporaire de l'ensemble de charnière désaxable par soustraction de l'arbre de pivotement temporaire, et
d) montage définitif de la porte sur la caisse, incluant un remontage de l'ensemble de charnière désaxable, de sorte que les charnons sont définitivement montés pivotants l'un par rapport à l'autre autour d'un axe de pivotement, par l'intermédiaire de l'arbre de pivotement définitif.

L'invention sera mieux comprise à l'aide de la description qui suit, donnée uniquement à titre illustratif et non limitatif, et faisant référence aux dessins annexés dans lesquels :
- les figures 1 et 2 sont respectivement une vue en perspective éclatée et une vue de côté assemblée d'un ensemble de charnière conforme à l'invention, incluant une charnière comprenant un arbre de pivotement définitif ;
- les figures 3 et 4 sont respectivement une vue en perspective et une vue de côté de l'ensemble de charnière de la figure 1, dont la charnière est dépourvue son arbre de pivotement définitif, l'ensemble de charnière comprenant un arbre de pivotement temporaire ; et
- la figure 5 est une vue en perspective de l'arbre de pivotement temporaire des figures 3 et 4.

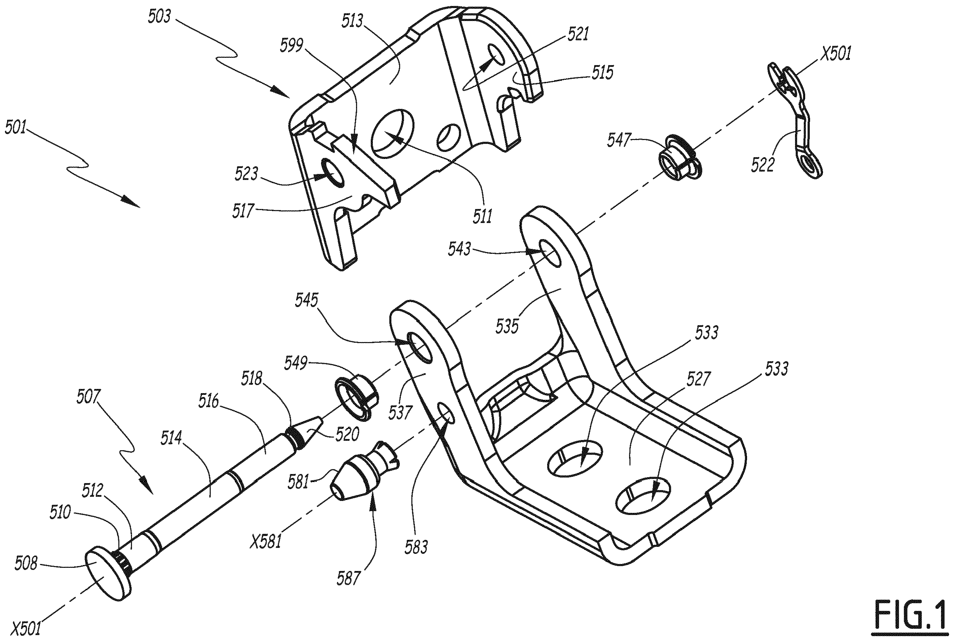

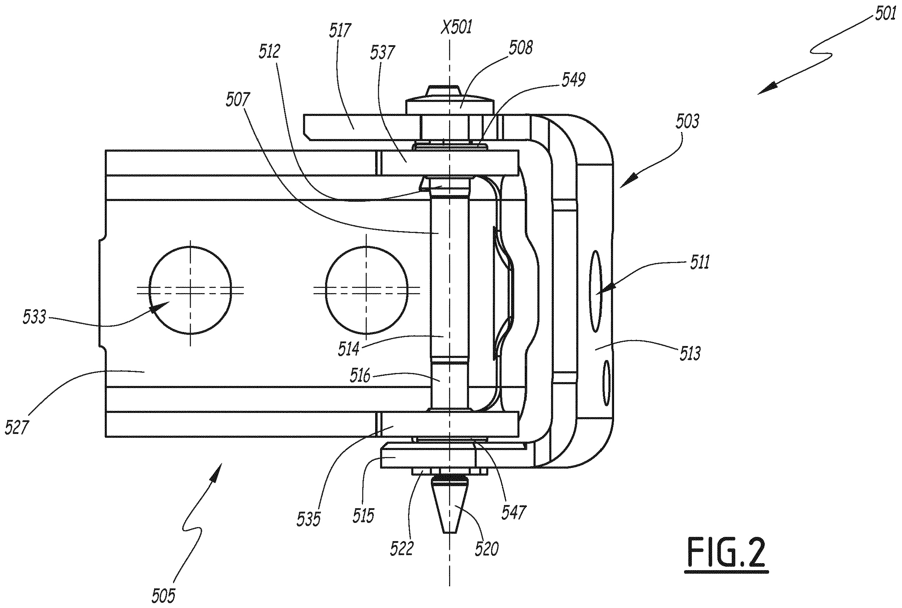

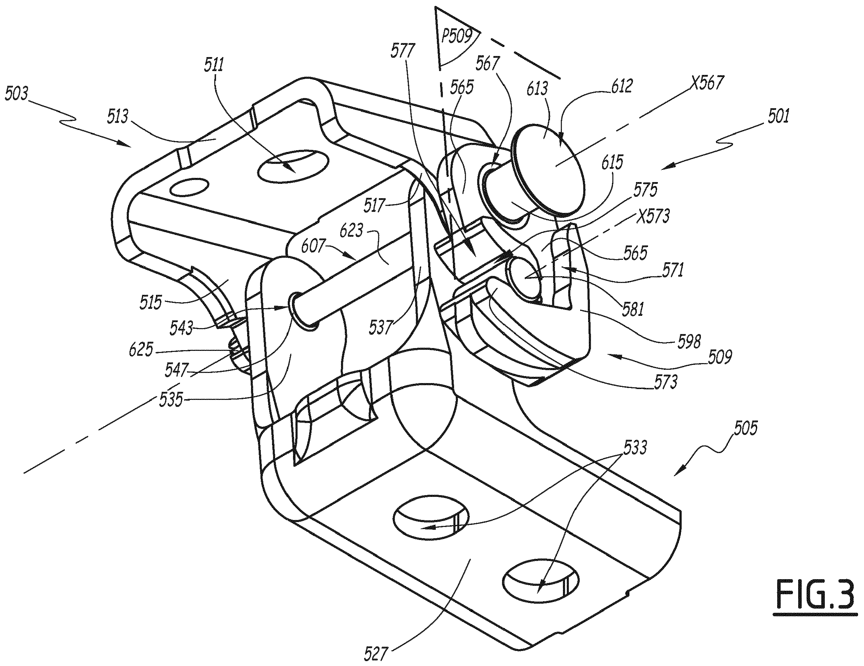

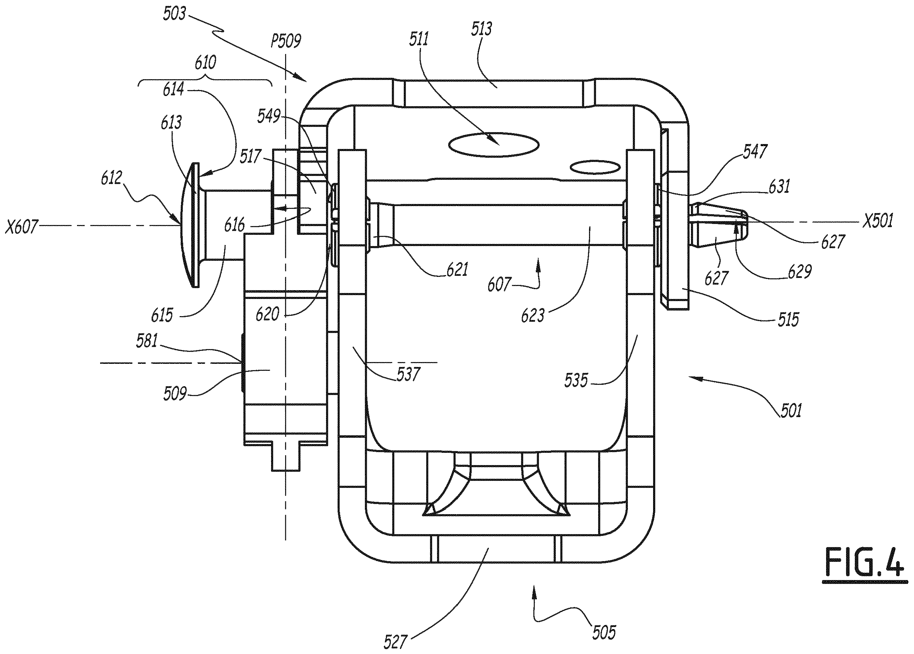

Les figures 1 et 2 illustrent un ensemble de charnière, comprenant une charnière 501, qui comprend un charnon d'ouvrant 503, un charnon de dormant 505, et un arbre de pivotement définitif 507. Dans les figures 3 et 4, l'arbre définitif 507 est remplacé par un arbre de pivotement temporaire 607, qui constitue une pièce distincte de l'arbre 507.

La charnière 501 est conçue pour équiper un véhicule automobile, du genre voiture ou véhicule utilitaire. La charnière 501 est néanmoins adaptée pour équiper d'autres types de véhicule, tant que ces véhicules sont équipés d'au moins une porte battante. La charnière 501 constitue un élément de liaison d'une porte battante du véhicule, du genre portière pour passager, portière pour chargement, ou hayon, avec une caisse du véhicule.

Le charnon 503 comprend une plaque de support 513 comprenant un orifice de fixation 511, ainsi que des branches 515 et 517 parallèles entre elles, au travers desquelles sont respectivement ménagés un orifice de pivotement 521 et un orifice de pivotement 523 coaxiaux avec un axe de pivotement X501.

Le charnon 503 est conçu pour être fixé sur la porte du véhicule par l'intermédiaire de son orifice 511. Le charnon 503 constitue une pièce mobile par rapport à la caisse du véhicule. Les branches 515 et 517 s'élèvent à partir de la plaque de support 513 dans des plans parallèles entre eux et perpendiculaires à un plan défini par la plaque 513. Les orifices de pivotement définissent un axe de pivotement X501 de la charnière 501. Lors d'une utilisation normale du véhicule et pendant la fabrication de celui-ci, l'axe X501 est préférentiellement vertical, ou proche de la verticale, par rapport au sol.

L'arbre de pivotement définitif 507 est monté au travers des orifices 521 et 523 de façon à être coaxial à l'axe X501.

Le charnon 505 comprend une plaque centrale 527, ou âme, au travers de laquelle sont ménagés deux orifices de fixation 533 par l'intermédiaire desquels le charnon 505 peut être fixé à la caisse du véhicule. Le nombre d'orifices 511 et 533 peut être modifié en fonction de l'application, et les orifices remplacé par tout moyen de fixation approprié.

Le charnon 505 comprend également deux jambes 535 et 537 qui s'étendent de façon parallèle, plus précisément dans des plans parallèles. Les jambes 535 et 537 sont reliées par la plaque 527, perpendiculaire aux jambes 535 et 537. Des orifices de pivotement 543 et 545 coaxiaux sont ménagés au travers respectivement des jambes 535 et 537.

Le charnon 503 est monté pivotant sur le charnon 505 par l'intermédiaire de l'arbre 507. L'arbre 507 est supporté par le charnon 505 par l'intermédiaire des orifices 543 et 545. Dès lors, les orifices 543 et 543 sont coaxiaux avec l'axe X501.

Hormis en ce qui concerne un orifice 583 défini ci-après, le charnon 505 constitue de préférence une pièce généralement symétrique par rapport à un plan intermédiaire s'étendant entre les jambes 535 et 537 et perpendiculairement à l'axe défini par les orifices 543 et 545, correspondant à l'axe X501 lorsque la charnière est montée comme sur la figure 2.

Des bagues 547 et 549, qui sont enfilées sur l'arbre 507, sont montées dans les orifices 543 et 545 comme illustré sur la figure 2. On peut alternativement ou conjointement prévoir des bagues montées respectivement dans les orifices 521 et 523. Les bagues ont préférentiellement une fonction de coussinet. En variante, la charnière est dénuée de bagues, ou comporte tout moyen alternatif pour supporter la fonction de pivot de cette charnière, en fonction de l'application.

Le charnon d'ouvrant 503 étant ainsi monté pivotant sur le charnon de dormant 505 par l'intermédiaire de l'arbre 507, ce charnon 503 peut évoluer entre une orientation d'ouverture et une orientation de fermeture, en fonction de sa position angulaire par rapport au charnon 505 autour de l'axe X501. L'écart angulaire entre ces deux positions s'élève par exemple à environ 70° (degrés). L'orientation d'ouverture de la charnière 501 correspond à une orientation d'ouverture de la porte du véhicule, dans laquelle la porte est en partie écartée de la caisse pour permettre l'introduction dans la caisse d'une personne ou d'un objet par l'intermédiaire d'une ouverture de passage de ladite caisse. L'orientation de fermeture de la charnière 501 correspond à une orientation de fermeture de la porte du véhicule, dans laquelle la porte du véhicule est rabattue contre la caisse de manière à obturer, de préférence totalement, l'ouverture de passage de cette dernière.

Comme visible sur la figure 1, l'arbre 507 du présent exemple comprend, successivement dans cet ordre le long de l'axe X501, une tête extrémale 508, un tronçon 510, un tronçon 512, un tronçon 514, un tronçon 516, une gorge 518 et un cône extrémal 520.

La tête 508 est de forme générale discoïde optionnellement bombée, et sert à la fois d'arrêt axial pour l'arbre 507 et de surface de préhension et/ou de frappe pour l'introduction de l'arbre 507 au travers des orifices 521, 523, 543 et 545. Le tronçon 510 est cannelé et de diamètre inférieur à la tête 508, et se loge dans l'orifice 523 jusqu'à l'entrée de la bague 549. Grâce aux cannelures, introduites en force dans l'orifice 523, l'arbre 507 est solidaire en rotation du charnon 503. Comme illustré sur la figure 2, le tronçon 512, de diamètre inférieur au tronçon 510 et de forme cylindrique à base circulaire, supporte le pivotement de la charnière 501 via la bague 549. Le tronçon 514, de diamètre inférieur au tronçon 512 et de forme cylindrique à base circulaire, est laissé libre lorsque l'arbre 507 est monté, et s'étend entre les jambes 535 et 537. Le tronçon 516 est de forme cylindrique à base circulaire et présente un diamètre inférieur au tronçon 514, de manière à traverser et supporter la bague 547 et l'orifice 521 pour le pivotement de la charnière 501. La gorge 518 sert à la fixation d'un segment d'arrêt 522, ou alternativement d'un anneau de retenue élastique, pour fixer axialement l'arbre 507, dans la charnière 501. Plus précisément, le segment 522 vient en appui contre la branche 515, en complément de l'appui de la tête 508 dans la direction opposée contre la branche 517. Le cône 520, pointant vers l'extrémité de l'arbre 507, permet de faciliter son introduction au travers de la charnière 501.

En variante, tout ou partie des éléments de l'arbre 507 sont modifiés en fonction de l'application. Des tronçons supplémentaires peuvent être ajoutés, et certains des éléments précités peuvent être remplacés par d'autres éléments. En particulier, l'arbre 507 peut être simplement de forme cylindrique à base circulaire.

Le charnon de dormant 505, le charnon d'ouvrant 503, l'arbre de pivotement définitif 507, ainsi que, optionnellement, les bague 547 et 549, sont préférentiellement réalisés en métal. La charnière 501 ainsi formée constitue un ensemble « à demeure », demeurant sur le véhicule à l'issue de la fabrication de ce dernier.

Pendant la fabrication du véhicule, on met en oeuvre l'arbre de pivotement temporaire 607 susmentionné, ainsi que, optionnellement, un dispositif d'encliquetage 509, constituant un arrêt de porte temporaire.

Plus précisément, on considère que la charnière 501 et l'arbre de pivotement temporaire 607 constitue un ensemble de charnière désaxable, c'est-à-dire dégondable. En effet, les charnons 503 et 505 peuvent être montés à pivotement l'un par rapport à l'autre autour de l'axe X501 par l'intermédiaire de l'arbre de pivotement temporaire 607, au lieu de l'arbre de pivotement définitif 507. Cet arbre 607 peut être soustrait, c'est-à-dire retiré des charnons 503 et 505 par démontage ou par destruction, ce qui confère le caractère « désaxable » à la charnière 501. La soustraction de l'arbre 607 entraîne une libération ou séparation des charnons 503 et 505 l'un de l'autre, c'est-à-dire que la charnière 501 est dans un état démonté, et que les charnons 503 et 505 ne sont plus liés à pivotement. L'arbre de pivotement définitif 507 peut ensuite être monté sur les charnons 503 et 505 pour remonter la charnière 501. On préfère que l'arbre 507 ne soit pas démontable, ou soit difficilement démontable, des charnons 503 et 505 une fois monté. Dans ce cas préférentiel, le montage définitif de l'arbre 507 rend la charnière non désaxable, c'est-à-dire non dégondable. Toutefois, on peut utiliser un arbre 507 démontable des charnons 503 et 505, son caractère « définitif » traduisant que l'arbre 507 a vocation à rester en place au sein de la charnière 501 à l'issue de la fabrication du véhicule, pendant au moins un partie de la durée de vie du véhicule, de préférence toute la durée de vie du véhicule. Selon cette option, la charnière 501 reste désaxable seulement pour des opérations de maintenance du véhicule.

La fabrication du véhicule automobile est effectuée selon un procédé à plusieurs étapes. Dans un premier temps, pour la partie du véhicule relative à la porte considérée et à la caisse, on fournit, c'est-à-dire par exemple que l'on fabrique ou que l'on achète, la caisse, la porte, et au moins une partie des éléments de l'ensemble de charnière susmentionné, à savoir au moins le charnon 503 et le charnon 505. On effectue ensuite un premier montage, temporaire, de la porte sur la caisse, en effectuant les sous-étapes suivantes, dans l'ordre le plus adapté à l'application : montage du charnon 505 sur la caisse, montage du charnon 503 sur la porte, et montage du charnon 503 et le charnon 505 à pivotement l'un par rapport à l'autre autour de l'axe X501, par l'intermédiaire de l'arbre de pivotement temporaire 607. On peut avantageusement prévoir la mise en place du dispositif 509 sur l'arbre 607, pour permettre un blocage ou une indexation de l'orientation relative des charnons 503 et 505 selon une ou plusieurs positions prédéterminées. Cela dépend des étapes de fabrications subséquentes à effectuer sur le véhicule. De préférence, la charnière 501 est fournie dans une configuration où les charnons 503 et 505 sont montés avec l'arbre temporaire 607 et optionnellement avec le dispositif 509, ce qui évite d'effectuer ce montage sur la chaîne de fabrication du véhicule.

Ensuite, on effectue des étapes de fabrication du véhicule, telles que l'application d'une couche de peinture, un passage en cataphorèse, ou autre.

Une fois ces étapes effectuées, on procède à un démontage temporaire de la porte, comprenant un démontage temporaire de l'ensemble de charnière désaxable par soustraction de l'arbre de pivotement temporaire 607.

La porte étant temporairement démontée, elle peut être emmenée à un lieu différent de la caisse, pour subir des étapes de fabrication supplémentaires, telles qu'un habillage. De même, la caisse peut parallèlement subir des étapes de fabrication supplémentaires, notamment également un habillage.

Une fois ces dernières étapes effectuées, on procède au montage définitif de la porte sur la caisse, incluant un remontage de l'ensemble de charnière désaxable. Pour cela, on monte les charnons 503 et 505 de façon définitive, à pivotement l'un par rapport à l'autre, autour d'un axe de pivotement X501, par l'intermédiaire de l'arbre de pivotement définitif 507 susmentionné.

De manière optionnelle non illustrée, le dispositif 509 peut être à nouveau monté à ce stade, de façon temporaire, sur la charnière 501, afin de maintenir ou indexer l'orientation de la porte dans une ou plusieurs orientations prédéterminées et ainsi faciliter les dernières étapes de fabrication du véhicule. On adapte optionnellement l'arbre définitif 507 en conséquence, afin qu'il puisse accueillir le dispositif 509.

Une fois le véhicule terminé, la charnière 501 comprend son arbre définitif 507, et est exempt de l'arbre 607 et du dispositif 509.

Des étapes de fabrication similaires peuvent être effectuées en parallèle dans le cas où le véhicule comporte plusieurs portes, et/ou dans le cas où chaque porte est montée sur la caisse à l'aide de plusieurs charnières 501.

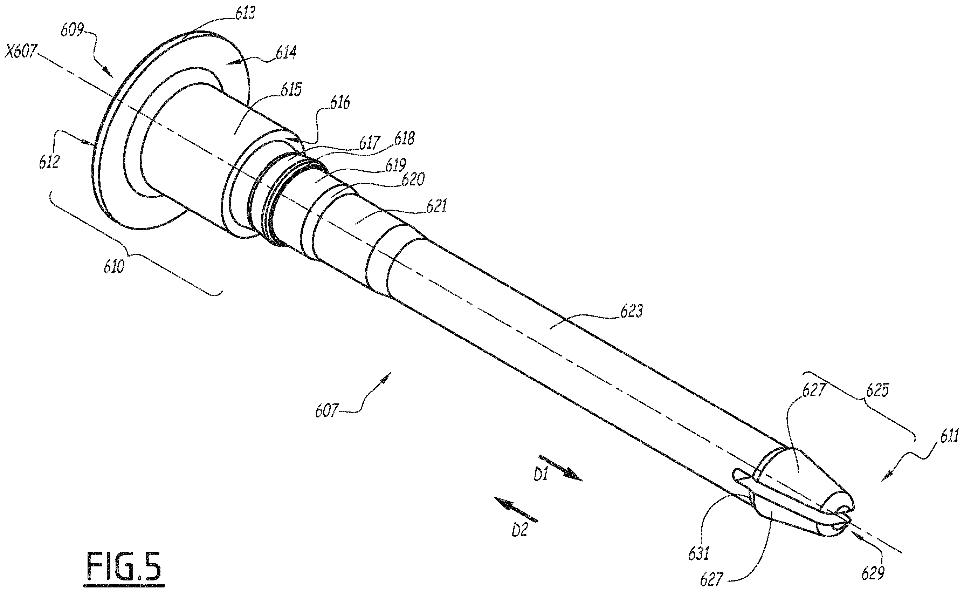

Tel qu'illustré sur la figure 5, l'arbre temporaire 607 comprend deux extrémités axiales 609 et 611 définissant un axe principal X607 de l'arbre 607. Sauf mention du contraire, on entend par « axial » une direction axiale par rapport à l'axe X607, et par « radial » une direction radiale par rapport à l'axe X607.

Lorsque l'arbre temporaire 607 est monté sur la charnière 501, les axes X607 et X501 sont sensiblement coaxiaux.

De préférence, l'arbre 607 présente généralement une forme de révolution autour de l'axe X607. De préférence, seulement certaines parties de l'arbre 607 ne présentent pas une forme de révolution, telle que, dans le présent exemple, la partie s'étendant à partir de l'extrémité 611, tel que décrite ci-après.

L'arbre 607 comprend, de l'extrémité 609 à l'extrémité 611 : une tête extrémale 613, formée à l'extrémité 609, un tronçon de préhension 615, formé à partir de la tête 613, un tronçon 617 de fixation du dispositif d'encliquetage 509, le tronçon 617 étant formé à partir du tronçon 615, un tronçon 619 de support au pivotement de l'orifice 523 ou, le cas échéant, de sa bague, le tronçon 619 étant formé à partir du tronçon 617, un tronçon 621 de support au pivotement de l'orifice 545, ou le cas échéant, de sa bague 549, le tronçon 621 étant formé à partir du tronçon 619, un tronçon de tige 623, formé à partir du tronçon 621, et un membre résilient 625 formé à l'extrémité 611.

En fonction de l'application, un ou plusieurs de ces tronçons peut être omis ou remplacé par un autre tronçon. Un ou plusieurs tronçons peut également être ajouté. Tous les tronçons sont préférentiellement solidaires les uns avec les autres, de façon à former un ensemble solidaire, sans partie mobile, hormis mention explicite du contraire dans la présente description.

L'arbre 607 comprend une partie extrémale 610, s'étendant à partir l'extrémité 609, qui sert à la manipulation de l'arbre 607 avec différents outils et/ou de façon manuelle, pour permettre son montage et son démontage. Cette partie extrémale 610 comprend la tête 613 et le tronçon 619.

La tête 613 est coaxiale avec l'axe X607 et s'étend dans un plan perpendiculaire à l'axe X607. De préférence, la tête 613 est de forme discoïde. Dans le présent exemple, une face 612 de la tête 613 est bombée, du côté opposé à l'extrémité 611. Préférentiellement, la tête 613 est adaptée pour recevoir une pression axiale d'un opérateur, effectuée manuellement ou à l'aide d'un outil, afin de permettre l'engagement de l'arbre 607 dans les orifices 521, 523, 543 et 545 au moment du montage temporaire de la porte, ou prélablement. La tête 613 peut également être adaptée à recevoir des chocs axiaux appliqués à l'aide d'un outil de frappe, de type maillet ou similaire, aux mêmes fins. Quelle que soit sa forme, la tête 613 présente les dimensions les plus élevées de l'arbre 607 dans le sens radial à l'axe X607.

Le tronçon 619 forme un épaulement sous-tête, coaxial avec l'axe X607. Le tronçon 619 est conformé pour être saisi à la main, ou par un outil, du genre pince, non illustré, dont les mâchoires viennent saisir radialement le tronçon 619, de part et d'autre de ce tronçon 619. La saisie à la main ou à l'outil permet notamment d'assurer l'étape de soustraction de l'arbre 607 susmentionnée, en tirant sur l'arbre 607 jusqu'à extraction de cet arbre 607 des orifices 521, 523, 545 et 547. En fonction du mode de préhension, à la main, ou selon le type d'outil que l'on souhaite voir saisir le tronçon 619, on choisit la forme de la surface radiale et la longueur axiale du tronçon 619. Dans le présent exemple, cette forme est cylindrique à base circulaire. De préférence, le tronçon 619 présente une longueur, mesurée le long de l'axe X607, supérieure à celle de la tête 613. De préférence également, le tronçon 619 présente un diamètre, ou un encombrement radial, inférieur à celui de la tête 613, de façon à permettre une mise en appui axiale de l'outil contre une surface axiale 614 de la tête 613, laquelle est tournée vers l'extrémité 611. Enfin, le tronçon 619 présente un diamètre supérieur à celui de l'orifice 523 contre lequel il est destiné à être en contact, de façon à ne pas pouvoir traverser cet orifice 523. De manière générale, on prévoit que le tronçon 619 présente un diamètre supérieur à au moins l'un des orifices de pivotement des charnons, sinon tous, de façon à ne pas les traverser par enfilement.

Le tronçon 617 est coaxial avec l'axe X607 et est configuré pour recevoir, selon une fixation amovible, le dispositif 509, via un orifice de montage 567 de ce dernier. Tel qu'illustré sur la figure 5, ce tronçon 617 présente préférentiellement une forme cintrée, c'est-à-dire qu'il présente une dépression ou gorge, entourant l'axe X607, dans une partie intermédiaire du tronçon 617. Cette forme cintrée permet un encliquetage du dispositif 509, comme illustré sur les figures 3 et 4, en fixant ce dernier axialement le long de l'axe X607 sur l'arbre 607. L'orifice 567 est capturé dans le creux de la forme cintrée. Cet encliquetage est possible notamment par élasticité du matériau de l'arbre 607. L'orifice 567 présente préférentiellement une forme généralement cylindrique à base circulaire, mais peut en variante présenter une forme correspondante avec celle du tronçon 617, ou toute forme appropriée pour renforcer l'effet d'encliquetage avec le tronçon 617. Le tronçon 617 présente un diamètre, ou un encombrement radial, inférieur à celui du tronçon 615, de sorte que ces tronçons 615 et 617 soient séparés par une surface axiale 616 tournée vers l'extrémité 611 et permettant une mise en butée axiale du dispositif 509 contre la surface 616. Le diamètre du tronçon 617 est de valeur proche ou égale à celle du diamètre de l'orifice 567. En pratique, on enfile le dispositif 509 sur l'arbre 607, via l'extrémité 611, avant montage de l'arbre sur les charnons 503 et 505.

En variante, on peut prévoir que le dispositif 509 est simplement enfilé sur l'arbre 607, sans encliquetage.

En variante, le tronçon 617 peut être configuré selon toute forme appropriée visant à permettre une fixation axiale amovible du dispositif 509.

En variante, on peut prévoir que l'arbre 607 et le dispositif 509 sont formés d'un seul tenant, par moulage d'un même matériau, ou sont pré-montés à demeure, par exemple par surmoulage, soudage ou collage, ce qui évite d'avoir à monter le dispositif 509 sur l'arbre 607 au cours de la fabrication du véhicule.

Le tronçon 619 est coaxial avec l'axe X607 et est configuré pour recevoir et supporter l'orifice 523, ou, le cas échéant, la bague 549. Ce tronçon 619 présente préférentiellement une forme cylindrique à base circulaire pour permettre le pivotement de l'orifice 523. En pratique, le diamètre du tronçon 619 est inférieur ou égal au diamètre de l'orifice 523, ou de sa bague 549, le cas échéant. Le tronçon 619 présente préférentiellement un diamètre inférieur à celui des tronçons précédents, notamment à celui du tronçon 617. Ainsi, le tronçon 619 forme un arrêt axial 618, avec, dans le présent exemple, le tronçon 617. Cet arrêt 618 est tourné vers l'extrémité 611, de façon à positionner axialement le charnon 503 le long de l'arbre 607. Pour former cet arrêt 618, on prévoit que le diamètre du tronçon 617 est supérieur au diamètre de l'orifice 523.

Le tronçon 621 présente des caractéristiques similaires au tronçon 619, formant avec ce dernier un arrêt axial 620, tourné vers l'extrémité 611, pour arrêter axialement le charnon 505. Le tronçon 621 supportant l'orifice 545 ou la bague qui y est introduite, on prévoit en pratique que le diamètre du tronçon 621 est inférieur ou égal au diamètre de cet orifice 545 ou de sa bague éventuelle. Pour former l'arrêt 620, on prévoit que le diamètre du tronçon 619 est supérieur au diamètre de l'orifice 545.

On prévoit préférentiellement que, à partir de la tête 613, les diamètres des différents tronçons, s'étendant sur au moins une première moitié de l'arbre, sont décroissants, pour permettre un montage de l'arbre 607 aisé sur la charnière 501. De préférence, on prévoit au moins deux arrêts axiaux, tournés dans une direction de montage D1 de l'arbre 607, pour positionner axialement le charnon 503 par rapport au charnon 505. Le montage de l'arbre 607 s'effectue avec l'extrémité 611 enfilée la première. Cette direction D1 est opposée à la l'extrémité 609 et parallèle à l'axe X607. Dans le présent exemple, les deux arrêts axiaux 618 et 620 sont tournés vers l'extrémité 611.

En variante, l'arbre 607 comprend un seul des arrêts axiaux susmentionnés.

En variante encore, d'autres arrêts axiaux sont prévus, en fonction de l'application.

Le tronçon de tige 623 est coaxial avec l'axe X607, et présente préférentiellement une forme cylindrique à base circulaire. Le tronçon 623 est de longueur suffisante pour relier les jambes 535 et 537. Plus précisément, le tronçon 623 s'étend à partir du tronçon 621, jusqu'au travers des orifices 521 et 535. Le tronçon 623 présente donc un diamètre inférieur à celui des orifices 521 et 535, et de tout orifice au travers que ce tronçon doit traverser au cours du montage de l'arbre 607. Il existe ainsi préférentiellement un jeu radial entre les orifices 521, 535, 545, 547 et le tronçon 623, pour faciliter le montage de l'arbre 607. En pratique, le tronçon 623 est avantageusement de longueur axiale au moins deux fois plus élevée que les tronçons 615, 617, 619 et 621.

De manière optionnelle, le tronçon 623 est de diamètre suffisamment faible pour pouvoir être sectionné, en cas de nécessité, par un outil, lorsque le démontage temporaire de la porte doit avoir lieu. Le fait que l'arbre 607 soit exempt de matériau métallique, comme décrit ci-après, facilite cette opération de découpe par un outil. Cette découpe occasionne la destruction de l'arbre 607. Les parties découpées peuvent alors facilement être extraites respectivement des orifices 521 et 543 et des orifices 523 et 545, grâce au jeu radial prévu pour le tronçon 623.

Le membre 625 est résilient, c'est-à-dire qu'il est configuré pour être élastique, par rapport au reste de l'arbre 607 prévu pour être relativement plus rigide. Dans le présent exemple, le membre résilient 625 comprend deux jambes résilientes 627. Les jambes 627 définissent entre elles une encoche axiale de débattement 629, qui s'étend dans un plan s'étendant selon l'axe X607. L'encoche 629 débouche à l'extrémité 611, ainsi que radialement. Les jambes 627 sont donc disposées en U, de façon parallèle à l'axe X607, comme illustré sur la figure 5. Du fait de la configuration des jambes 627 et de l'encoche 629, le membre 625 est configuré pour présenter une configuration radialement resserrée, non illustrée, et une configuration radialement étendue, correspondant à celle représentée sur la figure 5, et pour revenir, par élasticité des jambes 627, vers la configuration radialement étendue lorsqu'il est mis en configuration radialement resserrée. Le passage de la configuration radialement étendue à la configuration radialement resserrée correspond, dans le présent exemple, à un rapprochement des jambes 627 l'une de l'autre, ou d'au moins l'une d'entre elle vers l'autre, au niveau de l'encoche 629. Ainsi, l'extrémité libre des jambes constitue un élément mobile de l'arbre 607. Au maximum, les jambes 627 sont en contact l'une avec l'autre à proximité de l'extrémité 611.

En configuration radialement resserrée, les jambes 627 sont à l'oblique par rapport à l'axe X607 et convergent en direction de l'extrémité 611. Ainsi, dans la configuration radialement resserrée, le diamètre extérieur du membre 625 est légèrement réduit, ce qui permet au membre résilient 625 de franchir les orifices de pivotement 521, 523, 543 et 545. En configuration radialement resserrée, l'arbre 607 peut être monté sur la charnière 501 en circulant axialement au travers des orifices 521, 523, 543 et 545. De préférence, le montage est opéré jusqu'à mise en butée des butées axiales 618 et 620 contre les charnons 503 et 505.

En configuration radialement étendue, le membre résilient forme un arrêt axial 631, tourné dans une direction de démontage D2, opposée à la direction de montage D1, pour ainsi s'opposer au démontage de l'arbre 607. L'arrêt 631 empêche un franchissement de l'orifice 521 par l'arbre 607 dans la direction D2.

Avantageusement, les charnons 503 et 505 sont axialement fixés l'un par rapport à l'autre par l'arrêt axial 631 du membre résilient en configuration radialement étendue, et par au moins l'un des arrêts 618 et 620, lorsque l'arbre 607 est monté, comme illustré sur les figures 3 et 4. En variante, on peut prévoir que l'arbre 607 autorise un léger jeu axial de la charnière 501, par espacement adéquat des arrêts 618, 620 et 631 le long de l'axe X607.

Comme illustré, le membre 625 présente avantageusement une forme convergente dans la direction D1 afin de faciliter le montage de l'arbre 607. Toutefois, l'arrêt 631 présente un angle plus abrupt de façon à rendre plus difficile le démontage de l'arbre 607, optionnellement jusqu'à nécessiter l'utilisation d'un outil de préhension tel que susmentionné, ou d'avoir recours à une découpe du membre 625. On peut également prévoir qu'un pincement radial manuel, ou à l'aide d'un outil, des jambes 627 suffise à faire passer le membre 625 en configuration radialement resserrée, de façon à autoriser le démontage de l'arbre 607 selon la direction D2.

Toute forme de réalisation alternative du membre 625 est possible, tant que le membre présente les deux configurations susmentionnées. Par exemple, on peut prévoir un nombre de jambes différent de deux. On peut prévoir d'autres moyens que des jambes.

En variante, alternativement au membre résilient 625 prévu à l'extrémité 611, on prévoit un membre résilient de même fonction à hauteur du tronçon 621. En pratique, le tronçon 621 comporte par exemple une encoche radiale traversante, qui rend le tronçon 621 suffisamment déformable pour pouvoir évoluer entre une configuration radialement reserrée et une configuration radialement étendue. Le tronçon 621 comporte également une partie qui, en configuration radialement étendue, est de diamètre plus élevé que l'orifice 545 ou sa bague 549, pour permettre la fixation axiale de l'arbre 607 dans la charnière. Cette partie, en configuration radialement resserrée, est de diamètre suffisamment faible pour permettre l'introduction et le retrait de l'arbre temporaire.

On prévoit que l'arbre 607 est exempt de matériau métallique. En d'autres termes, l'arbre 607 est formé dans un ou plusieurs matériaux non métalliques. De préférence, l'arbre 607 est majoritairement réalisé en matière plastique. Cette matière plastique est préférentiellement du polyamide 4.6, ou PA 4.6, qui est particulièrement adapté à cet usage spécifique, notamment grâce à sa haute résistance à la chaleur et aux contraintes mécaniques, tout en étant peu coûteux. Il est avantageux que la matière plastique résiste aux efforts en jeu dans l'arbre 607 tout au long des différentes opérations réalisées sur le véhicule lors de sa fabrication, notamment sur la ligne de peinture, pendant l'étuvage et la cataphorèse. La nature de la matière plastique rend l'arbre 607 naturellement résistant aux différents traitements chimiques effectués sur le véhicule, notamment en ce qui concerne la peinture. Il n'est avantageusement pas nécessaire de prévoir un traitement de surface de l'arbre 607, contrairement à un arbre métallique. Le coût de fabrication de l'arbre 607 est donc réduit. La matière plastique évite en particulier le dépôt accidentel de particules sur l'arbre 607 lors de la fabrication, notamment lors de la cataphorèse.

On entend par « majoritairement réalisé en matière plastique » que les constituants fonctionnels principaux de l'arbre 607 soumis à une usure, par exemple par frottement, sont réalisés dans une telle matière. Les autres parties de l'arbre 607 sont alors optionnellement réalisées dans un matériau différent que la matière plastique.

On peut prévoir que les tronçons 619, 621 et le membre résilient 625, soumis à des frottements lors de la manipulation de la porte du véhicule, sont réalisés dans cette matière plastique.

On peut prévoir que le tronçon 623 est réalisé en matière plastique, ce qui rend le tronçon 623 suffisamment résistant pour ne pas rompre pendant les étapes de fabrication du véhicule. Néanmoins, le matériau plastique étant moins dur que le métal, le tronçon 623 peut plus facilement être sectionné aux fins du démontage de l'arbre 607. L'arbre 607 est donc particulièrement facile à utiliser.

On peut prévoir que la partie extrémale 610, comprenant le tronçon 615 et la tête 613, est réalisée en matière plastique.

De façon préférentielle, l'arbre 607 est formé d'un seul tenant dans un seul même matériau, qui est la matière plastique susmentionnée. On peut alors fabriquer l'arbre 607 à très bas coût, par exemple par injection de matière plastique dans un moule.

On note également que certains axes temporaires métalliques de l'art antérieur comportent à la fois un arbre métallique, pour supporter le pivotement des charnons de la charnière, et différents éléments pour fixer axialement cet arbre temporaire sur la charnière, tels que des anneaux élastiques, des goupilles, des éléments à sertir du genre bouterolle ou rivet, des entretoises. Dans le présent exemple, l'arbre 607 est avantageusement formé d'un seul tenant et ne nécessite pas d'éléments rapportés pour être fixé sur la charnière 501, de sorte que la fabrication et l'utilisation de l'arbre 607 sont simplifiées. Cela est rendu possible notamment grâce à l'absence de matériau métallique dans l'arbre 607, laquelle permet de prévoir un membre résilient, tel que le membre 625 susmentionné, pour la fixation axiale de l'arbre 607. Par ailleurs, le fait de limiter le nombre d'éléments à rapporter sur l'arbre 607 permet d'éviter leur perte accidentelle sur la chaîne de production.

En variante, on pourrait choisir un polyéthylène plutôt qu'un polyamide comme matériau plastique, même si le polyamide est préféré. En variante, on pourrait utiliser un composite comprenant des fibres, par exemple en verre, et une matrice en matière plastique imprégnant ces fibres.

Dans le présent exemple, le dispositif 509, comprend un corps principal 565 qui s'étend le long d'un plan de symétrie P509 du dispositif 509, par rapport auquel le dispositif d'encliquetage 509 est symétrique.

Au travers du corps principal 565 est ménagé l'orifice de montage 567 du dispositif 509, sur l'arbre 607. De préférence, cet orifice 567 est également adapté à un montage sur l'arbre 507. L'orifice de montage 567 définit un axe de montage X567 perpendiculaire au plan P509 et coaxial avec l'axe de pivotement X501, lorsque le dispositif 509 est monté sur la charnière. L'orifice de montage 567 présente un diamètre ajusté, de façon à pouvoir être monté encliqueté sur le tronçon 617 de l'arbre 607, et optionnellement de façon à pouvoir être monté serré sur l'arbre de pivotement 507.

Le dispositif 509 comprend un rebord 598 qui fait saillie du corps principal 565, de part et d'autre du plan P509, en suivant une portion d'un contour extérieur du corps principal 565 autour de l'axe X567. Tel qu'illustré sur la figure 3, une surface de butée 571 est formée le long du rebord 598, la surface de butée 571 faisant face à l'axe X567. On comprend qu'une autre surface de butée 571 symétrique est formée de l'autre côté du plan P509. La surface de butée non visible présente une forme complémentaire avec une arrête 599, visible sur la figure 1, formée sur la branche 517 du charnon 503. La surface butée, non visible sur la figure 3 mais similaire à la surface 571, est configurée pour coopérer avec le charnon 503, liant ainsi en rotation le dispositif d'encliquetage 509 avec le charnon 503 autour de l'arbre de pivotement 507. Dans ce mode de réalisation, le dispositif 509 est lié en rotation avec le charnon 503 et non avec le charnon 505.

Par ailleurs, le dispositif d'encliquetage 509 comprend un crochet d'encliquetage 573 visible sur les figures 1 et 3. Le crochet 573 comprend une partie cylindrique 575 à base circulaire qui s'étend selon un axe d'encliquetage X573 parallèle à l'axe X501 au travers du corps principal 565. Le crochet d'encliquetage 573 comprend également un canal 577 qui relie radialement la partie cylindrique 575 au bord du corps principal 565. Le crochet d'encliquetage 573 est configuré pour être encliqueté autour d'un pion d'encliquetage 581, qui est fixé sur la jambe 537 du charnon 505. En l'espèce, le pion 581 est fixé par l'intermédiaire d'un orifice 583 ménagé au travers de cette jambe 537. Le pion d'encliquetage 581 présente une tête d'encliquetage 587 de forme cylindrique à base circulaire s'étendant le long d'un axe X581 parallèle à l'axe X501. Le diamètre de la tête d'encliquetage 587 correspond, en étant légèrement inférieur, au diamètre de la partie cylindrique 575 du crochet d'encliquetage 573. L'entraxe séparant l'axe X581 et l'axe X501 est identique à l'entraxe séparant l'axe X573 et l'axe X501. Par conséquent, lors d'une mise en rotation du charnon 505 par rapport au charnon 503 autour de l'axe X1, depuis l'orientation de fermeture jusqu'à l'orientation d'ouverture, la tête d'encliquetage 587 franchit le canal 577 par déformation mutuelle élastique du pion 581 et du canal 577, jusqu'à être accueillie au sein de la partie cylindrique 575 du crochet d'encliquetage 573, tel qu'illustré sur la figure 3. Dans cette configuration de la figure 3, le crochet d'encliquetage 573 est encliqueté avec le pion 581, autour de la tête 587 de ce dernier, c'est-à-dire que le pion 581 est retenu au sein du crochet d'encliquetage 573 par le canal 577. Le crochet d'encliquetage 573 peut être désencliqueté du pion 581 par application d'un couple suffisamment élevé sur le charnon 505 rapport au charnon 503, pour que le pion 581 puisse franchir à nouveau, dans l'autre direction, le canal 577, lors d'un pivotement de la charnière 501 depuis l'orientation d'ouverture à l'orientation de fermeture. Le crochet d'encliquetage 573 constitue ainsi un organe d'encliquetage configuré pour être encliqueté avec le charnon 503 lorsque la charnière est en orientation d'ouverture. Lorsque le crochet d'encliquetage 573 est encliqueté avec le pion 581, le dispositif d'encliquetage 509 et le charnon 505 sont fixés en rotation l'un par rapport à l'autre autour de l'axe X501, et donc également par rapport au charnon 503. La porte du véhicule est ainsi encliquetée en orientation d'ouverture.

Le dispositif 509 est préférentiellement exempt de matériau métallique. De préférence, le dispositif 509 est réalisé au moins partiellement, voire au moins majoritairement en matière plastique. De façon préférée, le dispositif 509 est entièrement réalisé en matière plastique. Le passage en cataphorèse du véhicule n'entraîne alors pas de dépôt de particules en surface du dispositif 509.

On entend par « majoritairement réalisé en matière plastique » que les constituants fonctionnels principaux soumis à une usure par frottement sont réalisés dans une telle matière, en particulier le crochet d'encliquetage 573 et l'orifice de montage 567. Le corps principal 565 et la butée 571 sont alors optionnellement réalisés dans un matériau différent que la matière plastique. Ainsi, toute usure éventuelle du dispositif d'encliquetage 509 et du pion 581 ne génère pas de limaille métallique. De plus, la matière plastique résiste aux différentes opérations réalisées sur le véhicule lors de sa fabrication, notamment sur la ligne de peinture, pendant l'étuvage et la cataphorèse. De façon préférentielle, le dispositif d'encliquetage 509 est entièrement réalisé en matière plastique, par exemple par injection de matière plastique dans un moule.

De préférence, la matière plastique susmentionnée est un polyamide, de préférence du PA4.6. En effet, cette matière plastique est à la fois résistante à l'usure tout en étant compatible avec les traitements susmentionnés effectués sur le véhicule.

En variante, on peut prévoir une disposition inverse du dispositif 509, dans laquelle le dispositif 509 est lié en rotation avec le charnon 505 et non avec le charnon 503. Dans ce cas, le pion 581 est prévu sur le charnon 503. De manière générale, d'autres types de dispositifs avec des fonctions similaires au dispositif 509 peuvent être mis en oeuvre.

On peut combiner les caractéristiques des différentes variantes et différents modes de réalisations décrits ci-avant, pour autant que techniquement possible.

## Revendications

1. Ensemble de charnière désaxable pour un véhicule, l'ensemble de charnière désaxable comprenant :
- une charnière (501) qui comprend deux charnons (503, 505) prévus pour être montés pivotants l'un par rapport à l'autre autour d'un axe de pivotement (X501), par l'intermédiaire d'un arbre de pivotement définitif (507) de la charnière, et en outre
- un arbre de pivotement temporaire (607), les charnons (503, 505) pouvant être montés à pivotement l'un par rapport à l'autre autour de l'axe de pivotement (X501) par l'intermédiaire de l'arbre de pivotement temporaire (607), préalablement au montage de l'arbre de pivotement définitif (507), l'arbre de pivotement temporaire (607) étant configuré pour être soustrait des charnons (503, 505) pour libérer ces derniers l'un de l'autre,
l'ensemble de charnière désaxable étant **caractérisé en ce que** l'arbre de pivotement temporaire (607) est exempt de matériau métallique.

2. Ensemble de charnière désaxable selon la revendication 1, **caractérisé en ce que** l'arbre de pivotement temporaire (607) est réalisé au moins partiellement, de préférence au moins majoritairement, en matière plastique.

3. Ensemble de charnière désaxable selon la revendication 2, **caractérisé en ce que** la matière plastique est du polyamide.

4. Ensemble de charnière désaxable selon l'une quelconque des revendications précédentes, **caractérisé en ce que** l'arbre de pivotement temporaire (607) est réalisé en une seule pièce d'un seul tenant, dans un même matériau.

5. Ensemble de charnière désaxable selon l'une quelconque des revendications précédentes, **caractérisé en ce que** l'arbre de pivotement temporaire (607) comprend en outre au moins deux arrêts axiaux (618, 620), tournés dans une direction de montage (D1) de l'arbre de pivotement temporaire (607), pour positionner axialement les charnons (503, 505) l'un par rapport à l'autre lorsque ces charnons (503, 505) sont montés par l'intermédiaire de l'arbre de pivotement temporaire (607).

6. Ensemble de charnière désaxable selon l'une quelconque des revendications précédentes, **caractérisé en ce que** l'arbre de pivotement temporaire (607) comprend en outre un membre résilient (625) configuré pour :
- présenter une configuration radialement resserrée, dans laquelle l'arbre de pivotement temporaire (607) peut être monté sur la charnière (501) de façon à ce que les charnons (503, 505) soient montés pivotants par son intermédiaire,
- présenter une configuration radialement étendue (figure 5), dans laquelle, lorsque l'arbre de pivotement temporaire (607) est monté, le membre résilient (625) forme un arrêt axial tourné dans une direction de démontage (D2) de l'arbre de pivotement temporaire (607), de façon que le membre résilient (625) s'oppose au démontage de l'arbre de pivotement temporaire (607) des charnons (503, 505), et
- revenir par élasticité vers la configuration radialement étendue lorsqu'il est mis en configuration radialement resserrée.

7. Ensemble de charnière désaxable selon la revendication 6, **caractérisé en ce que** le membre résilient (625) comprend deux jambes résilientes (627) définissant entre elles une encoche axiale de débattement (629) débouchant à une extrémité axiale (611) de l'arbre de pivotement temporaire (607), le passage de la configuration radialement étendue à la configuration radialement resserrée correspondant à un rapprochement d'au moins l'une des jambes résilientes (627) vers l'autre au niveau de l'encoche axiale de débattement (629).

8. Ensemble de charnière désaxable selon l'une quelconque des revendications précédentes, **caractérisé en ce que** l'arbre de pivotement temporaire (607) comprend :
- un tronçon de tige (623), de diamètre inférieur à des orifices de pivotement (521, 523, 543, 545) ménagés au travers des charnons (503, 505), et au travers desquels l'arbre de pivotement temporaire (607) est accueilli lorsque les charnons (503, 505) sont montés à pivotement par son intermédiaire, et
- une partie extrémale de manipulation (610), comprenant une tête extrémale (613) de forme généralement discoïde, ainsi qu'un tronçon de préhension (615) s'étendant entre la tête extrémale (613) et le tronçon de tige (623), le tronçon de préhension (615) présentant un diamètre inférieur à celui de la tête extrémale (613) et supérieur à celui d'au moins l'un des orifices de pivotement (521, 523, 543, 545).

9. Ensemble de charnière désaxable selon l'une quelconque des revendications précédentes, **caractérisé en ce que** :
- l'ensemble de charnière désaxable comprend un dispositif d'arrêt de porte (509) présentant un orifice de montage traversant (567), et
- l'arbre de pivotement temporaire (607) comprend un tronçon d'encliquetage (617) du dispositif d'arrêt de porte (509) sur l'arbre de pivotement temporaire (607), pour fixer axialement le dispositif d'arrêt de porte (509) sur l'arbre de pivotement temporaire (607) par enfilement du dispositif d'arrêt de porte (509) sur le tronçon d'encliquetage (617) via l'orifice de montage (567).

10. Procédé de fabrication d'un véhicule, le procédé comprenant les étapes successives suivantes :
- a) fourniture d'une caisse du véhicule, d'au moins une porte du véhicule et d'au moins un ensemble de charnière désaxable conforme à l'une quelconque des revendications 1 à 9,
- b) montage temporaire de la porte sur la caisse, en montant l'un des charnons (505) sur la caisse et l'autre charnon (503) sur la porte, les charnons (503, 505) étant montés de façon pivotante l'un par rapport à l'autre autour de l'axe de pivotement (X501) par l'intermédiaire de l'arbre de pivotement temporaire (607),
- c) démontage temporaire de la porte, comprenant un démontage temporaire de l'ensemble de charnière désaxable par soustraction de l'arbre de pivotement temporaire (607), et
- d) montage définitif de la porte sur la caisse, incluant un remontage de l'ensemble de charnière désaxable, de sorte que les charnons (503, 505) sont définitivement montés pivotants l'un par rapport à l'autre autour d'un axe de pivotement (X501), par l'intermédiaire de l'arbre de pivotement définitif (507).
